# EUROPEAN PATENT APPLICATION

(11) **EP 0 982 251 A2**
(43) Date of publication of application: **01.03.2000**
(21) Application number: 99114475.9
(22) Date of filing: 23.07.1999
(51) Int. Cl.: B65G 49/06

(54) **Automatic or semi-automatic machine for taking away glass sheets or different materials from a storing section and feeding a process machine and/or vice versa**

(30) Priority: 24.08.1998 IT TV980117
(71) Applicant: FOR.EL. BASE di VIANELLO FORTUNATO & C. S.n.c., 31056 Vallio di Roncade (Treviso) (IT)
(72) Inventor: Vianello, Fortunato, 31056 Vallio di Roncade (TV) (IT); Moschini, Dino, 31050 San Cipriano (TV) (IT)

(57) **Abstract**

The following application has for object an automatic or semiautomatic machine suitable for transfer, in a proper, economic and sate way glass sheets from a storing section, this last being a complex robotic system or a simple jack stand or intermediate systems, to a cutting line or vice versa. The same machine is not limited to the above situation but can be used in all those cases where the glass sheet, or different materials sheet, has to be transferred from a machine to another for processing or from a storing system to another for storing.

The main characteristic of the machine is the peculiar sequence of the motion of their mechanisms of taking-off, in such a way that the sheet is taken-off from the storing section, where it's laying in adhesion with the other sheets, articulating a first partial taking-off and a first detaching of the upper edge of the sheet, this detaching being of a magnitude superior as regards to that of lifting, a following global contact and a following lifting combined with a removal.

## Description

### STATUS OF THE ART AND RELATIVE PROBLEMS

Today it's known carry out the taking-off and the transferring of the sheets of glass from a storing system to a cutting tine trying to solve the problem of detaching the front glass from the underlying glasses by means of air jets acting between the sheet to be taken-off and the underlying sheets in correspondence to their superior side. This system, if as principle is functioning, really it presents operating limits in the case the glasses are so stuck to be in a kind of vacuum condition, that is of a total absence of air, between their faces. Due to the planarity and the conditions of good cleaning of the glass, this especially in the case of laminated glasses, this condition is always more frequent and therefore, usually, the operator helps manually the first detaching at a portion of the front glass from the underlying glasses so to aid the first inlet of the air blowing or anyhow the operator assist with his presence all the sequences of the automatic or semiautomatic process in such a way to stop the working cycle in case of abnormalities, particularly frequent during the phase of detaching of the front glass from the underlying glasses. As soon as this first step is engaged, the complete detaching of the front sheet is easily obtained by means of kinematics mechanisms of taking-off, typically constituted by suction cups designed as dimensions and quantity to the dimensions and thickness of the glass sheet.

As well as it is known an alternative solution which is that to lay all the frame keeping the mechanisms of taking-off according to a plane slightly inclined, or towards the vertical or the oriental line of the plane of the storing frame, in such a way that an only first row of suction cups anticipates the contact in respect to the remaining rows and that the first displacement of the glass approaches the same glass to the remaining rows of suction caps. This method suffers of two big limits: the difficulty of adjusting and calibration of frames of big dimensions, as the defacing distance is of some mm over the length of 6 m (which is the most usual length of the glass sheet, either monolithic or laminated) and the impossibility of optimising the defacing according to the thickness and the type of the glass. The frame can in fact be adjusted during the installation according to one possibility of slope, while thickness and type of the glass are continuously and sensitivity changed according to the production under process.

We have to put in evidence how the problem of detaching the front sheet from those underlying is heavier as the row of sheets is reduced in quantity of glasses and is maximum when the last but one sheet has to be detached from the last due to the low weight of the stationary sheet.

An ulterior problem regarding the known status of the art is that the sheets laying in the storing system can have an irregular laying-out, that is not perfectly flat due to the difficult and onerous loading manipulation that often are carried out for a group of sheets (so said "package"). Said laying-out being skew, complicates the procedures of taking-off as all the machines of the status of the art use pantograph mechanisms for the motion of the suction caps and so are in need of a correct and fiat laying-out of the stored sheets. Another origin of the irregularity of the laying-out, particularly of the non flatness, is due to the same characteristics of the glass sheet, particularly when laminated glass, as, due to the production method the glass sheet is tensioned and consequently strained, by the way with a large range and types of strain.

It' s also known a machine operating in the border area of the marble sheet and similar material, but facing and solving different problems from those of the glass sheets with big dimensions and therefore flexible in their plane.

All these described machines, operating in the glass area, suffer, moreover, of other two non secondary problems: the possibility of damaging of the glass (and, especially in the case of laminated glasses and/or coat treated glasses, the relative costs reach also Lit/sqm 50.000) and the risk of accident even heavy for the involved persons, that, even if in the past it was only a matter of dramatic statistics, today are no longer allowed and thanks to the new rules about the safety, such a risk has to be analysed in the phase of the design of the machine and has to be prevented.

The research about the anteriorities as patents or patent applications has given the following list EP 0 314 632 A1 ; EP 0 621 220 A3; EP 0 642 998 A2 ; EP 0 691 291 A1.

In detail EP 0 314 632 teaches about a plant of big complexity with high costs as the selection of the sheet to be taken-off happens with direct access to the individual storing position and so it necessitates of systems of superior very extended rails, moreover the picking up involves an only sheet at time and so involves so many complete path as the quantity of sheets to be transferred. Above all this system presents the problem of the difficulty of detaching the sheet to be taken-off from the underlying sheets.

EP 0 621 220, which represents the more used method at the moment, needs a very large space, as the transferring of the sheet happens with horizontal layout and along an aisle which is additional to the storing area. This system also presents the problem of the difficulty of detaching the sheet to be taken-off from the underlying sheets.

EP 0 642 998 studies the problem of detaching the sheet to be taken-off from those underlying, but operating by means of a pantograph that therefore takes-off the sheet keeping it parallel to the initial laying plane. In the case of sheets particularly sticking, typical of glass sheets, the process is therefore difficult or impossible.
EP 0 691 291 operates in the field of marble sheets or similar materials, and teaches nothing about the need to solve the problem of the adhesion of the sheet to be taken-off with the underlying sheets.

The main scope of the object of this application is therefore that of solving the technical problems put in evidence avoiding the inconveniences of the status of the art and so finding out a procedure that allows to obtain, in automatic or semiautomatic way, the transferring efficient, economic and safe of sheets of glass or similar material from a storing area to a process area and/or vice versa or to another storing area.

The solution of the following matters: process automation, saving of space occupied in the factory, low costs of investment and low costs of exercise, product quality as the glass is not damaged during the manipulation and, at the end, but not of secondary importance, safety for the operator, is obtained with a machine as per present invention which constitutes a kind of revolution in the field of the movement of the glass sheets, particularly the transfer from a storing system to a process machine and/or vice versa.

### DESCRIPTION OF THE INVENTION

To allow a better understanding of the philosophy of the machine object of the present invention, it' advisable to describe, shortly, the types and the characteristics of the product processed by the machine, anyhow without limiting the use of the machine to the only case as described hereunder.

It' a question, mainly, of the so-said "laminated glass" or "coupled glass", constituted by two sheets of single glass coupled by means of a plastic membrane, the polyvinylbutirrale, that joints in a intimate and irreversible way the two sheets of glass to constitute a "multilayer" which therefore get high mechanics characteristics as a bigger momentum if inertia and modulus of resistance against flexion and very high characteristics of resistance to the breakthrough as the glass fragility, even if characteristics of the single sheet, is compensated by the high elastic resistance of the membrane intimately combined (it' enough to refer to the use, in the threodimensional version, in the automotive sector). Typically, the single sheets of glass, in the more diffused solutions, have a thickness of 3 or 4 or 5 or 6 mm, while the polyvinyl membrane is obtained using one or more sheets (max 4 generally) of unit thickness of 0.38 mm.

The fabrication process, that intimately joints the glass sheets and the membrane, consists on the following main, but not exclusive, phases: washing and drying of the single glass sheets, drawing up of the sheet or sheets of polyvinylbutirrale, in horizontal layout over the inferior glass sheet, laying of the superior glass sheet, pressing of the whole sheet/membrane/sheet in an horizontal press with heated rollers, final treatment in an high temperature autoclave (during which the membrane in transformed from opaque to transparent).

This process is typically applied until the maximum dimensions of the laminated glass of 6000 mm x 3210 mm, and the actual trend is to utilise as much as possible this maximum format as, as logic, as the sheet is big as better is the optimisation of the waste obtained with the following cuffing process.

Other than this glass typology, more and more diffused, also more simple glasses are processable in the machine of the present Invention, as the so said "monolitic" glasses, that is constituted by only one glass, which still has typical dimensions of 6000 mm x 3210 mm and present consequently a difficult movement due to the prevalence of the two dimensions (wide and high) against the third (thickness) and anyhow have the problem of the adhesion between the glass sheets.

Both the types (laminated and monotitic glasses) moreover can be interested by particular surface treatments as the deposit of molecular thickness layers of specific coatings, so said "low emissivity" or "reflecting, which give to the glass sheet particular physic properties as a low thermal transmission coefficient or a different refraction index etc., bur make more complex the movement of the sheets, as these coatings are susceptible of alteration and damages.

A further type of glass, used in the field of flat glass items is constituted by the so said "armored" glass. It' s constituted by more than two layers of glass intercalated by polyvinylbutirrale membranes to reach a global thickness of also 50 mm, typically used for applications antivandalism, antiintrusion and antiprojectile. Also this type of glass is processable with the machine of the present invention, naturally with executions mechanically designed and fabricated to hold heavier weight.

### WAY FOR THE EXECUTION OF THE INVENTION

To better describe a way of execution of the invention, hereafter the figures about one of the essential configuration are commented, hinting at possible alternative configurations which will be better defined in the claims, scanning the phases of the working cycle with the same progression of the figures.
FIGURE 0 shows the machine, in her main components and in the two main views. The main components are: 1 inferior frame, 2 intermediate frame, 3 superior frame, 4 row of superior suction cups, 5 matrix of inferior suction cups, 6 peripheral motorised conveyor, 7 idle plane conveyor, 8 sheets storing system [the same can be constituted by a simple support, by a semiautomatic motorised storing system, by an automatic motorised storing system, by a robotic storing system (for example that object of the European Patent application 98113672.4 of the same applicant)].

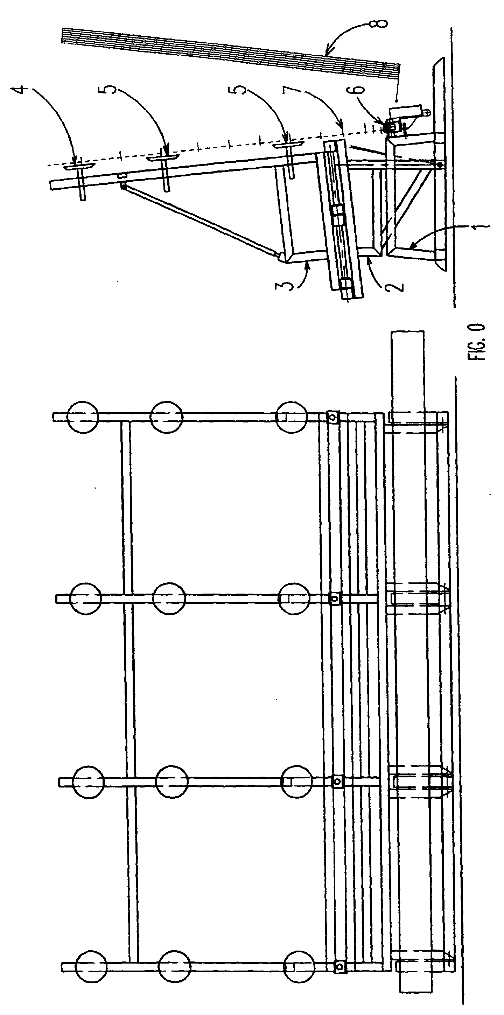

FIGURE 1 shows the machine in a non operating phase (in the following phases the common phrase "shows the machine in the phase of" is omitted) and part of the sheets of the storing system in their stationary position of interface with the taking-off machine.

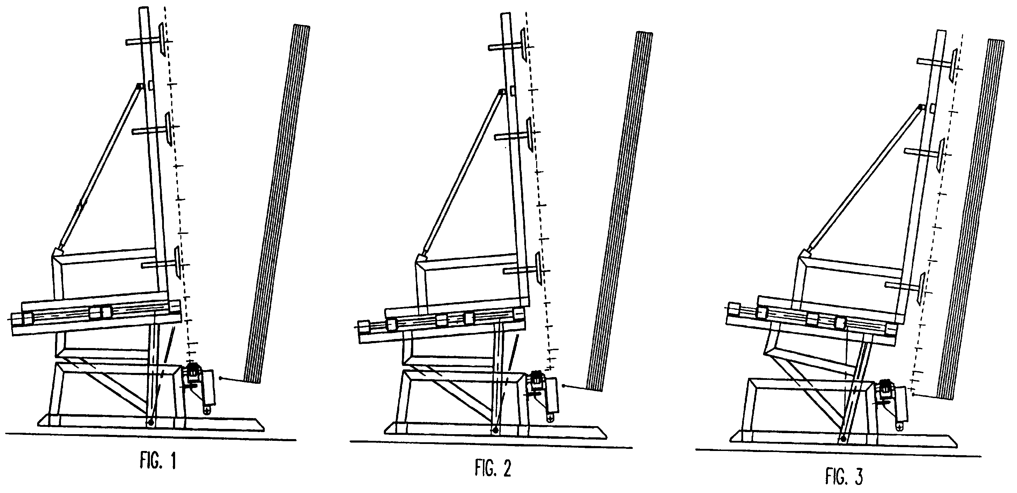

FIGURE 2: partial forward excursion of the superior frame.
FIGURE 3: total forward rotation of the intermediate frame.

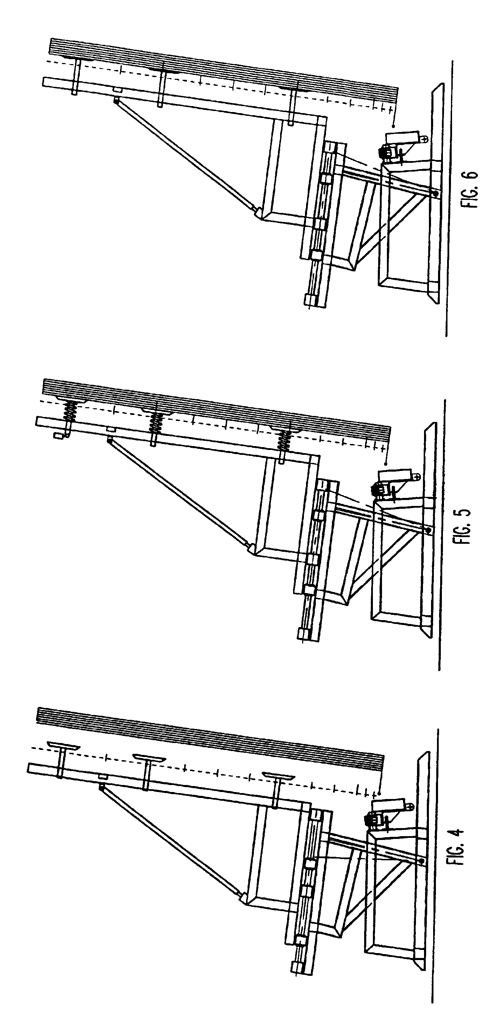

FIGURE 4: forward excursion of the suction cups.
FIGURE 5: forward excursion of the superior frame until the excitation of the sensor of preload suction cups springs.
FIGURE 6: suction cups vacuum excitation
FIGURE 7: backward excursion of the upper row of suction cups for bending of the superior flap of the glass.

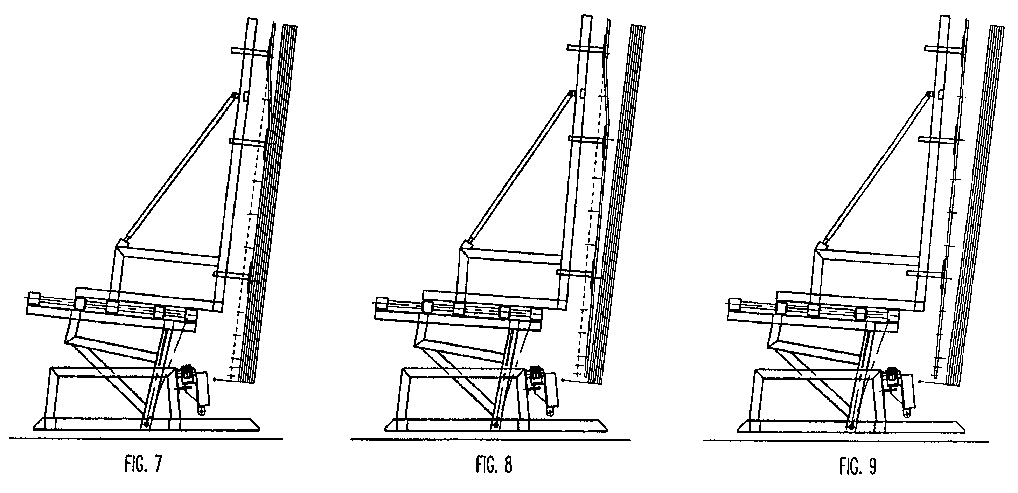

FIGURE 8: partial rotation of the intermediate frame for initial detaching and lifting of the complete sheet. It must be put in evidence the further inventive concept regarding the particular position of the rotating axis of the intermediate frame, as evident in the figure 8, that is in such position to obtain an important displacement for detachment of the superior flap of the exterior sheet from the underlying sheets against a negligible, infinitesimal, displacement for detachment of the inferior flap of the exterior sheet from the underlying sheets, said displacements for taking-away being combined with a finite lifting-up displacement of the complete sheet as regards to the inferior supporting base. This lifting displacement moreover helps the phase of the following figure.
FIGURE 9: backward excursion of the matrix of inferior suction cups.

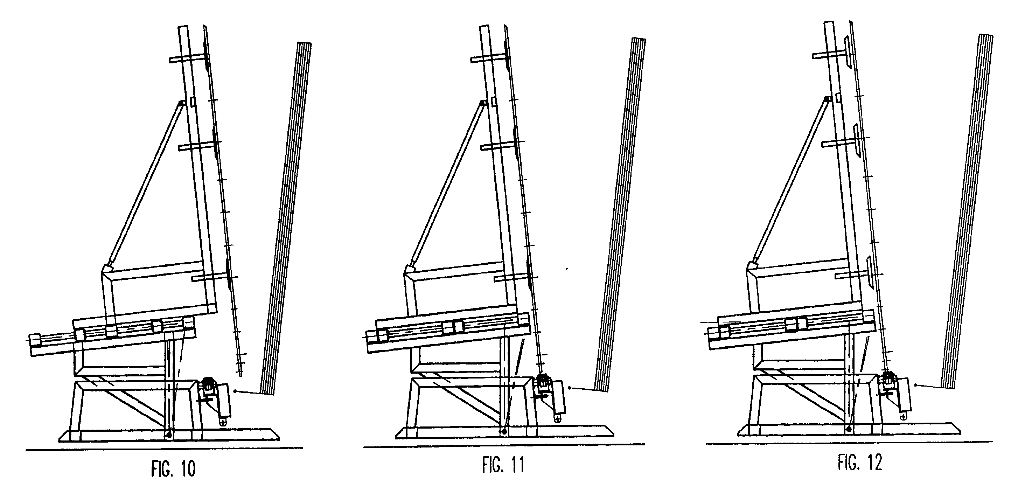

FIGURE 10: total rotation of the intermediate frame
FIGURE 11: backward excursion of the superior frame until the zero set point.
FIGURE 12: release of vacuum of suction cups and automatic return of the suction cups under the running plane (idle plane conveyor) and automatic dropping of the sheet over the peripheral motorised conveyor (as consequence of the vacuum release of the suction cups) for the transferring to the following working station.
NOTE: the various components of the machine can also be activated with sequences different from those above described, simply via software, which is very flexible, above all to set the more valid and suitable cycle of taking-off and transfer in relation with the type and thicknesses of the glass sheet (the working cycle as described is anyhow an all-purpose cycle).

Naturally all the movements linked to the phases of the cycle are interlaced between them, by using a parallel always active link logic, to avoid conditions of interference between the glass sheet and the parts of the machine or dropping of the glass sheet from the suction cups when the inferior supports are not at site. Moreover such a logic controls the interface and the sequences with the following process machine. Moreover a logic for the control of the vacuum conditions of the suction cups is always active to allow eventual actions of rescuing of the glass sheet.

The present invention is susceptible of various options, all comprised in the inventive concept as for example the position of the bending zone for the sheet flap for detaching from the underlying stuck sheets, the origin (storing system or process machine) and the destination (process machine or storing system) of the sheet, the interfacing with the dimensions of the sheet, the driving means which can be electric, electric-electronic, pneumatic, hydraulic and/or combined, the control means which can be electronic or fluidic and/or combined, etc.

The manufacturing details can be substituted with others technically equivalent. The materials and the dimensions can be in a large range according to the exigencies, particularly connected with the type and dimensions of the sheets.

Moreover the field of use can be not limited to the only sector of the sheet of glass, either monolitic or laminated or armored, but any sector where the problem to be solved is that of moving sheets (that is objects with two dimensions prevalent on the third, and therefore not rigid and with not flat arrangement), particularly of taking-off one and only one at time from a group of more than one when these are in reciprocal sticking condition.

## Claims

1. machine for taking-off a sheet of glass or similar material from a storing area or process area containing at least one sheet, but typically more sheets, and for its transfer to a process machine, or to another storing area, the sheet being of any dimension and any type, the origin and destination layout being vertical, horizontal or combined, **characterized by the fact that** the grip means carry out a first bending of an only flap of the sheet in such a way to initialize the progressive detaching from the underlying sheets.

2. machine as per claim 1 **characterized by the fact that** instead in correspondence with a sheet flap said bending is carried out in correspondence with a sheet corner.

3. machine as per claim 1 **characterized by the fact that** further than with the flexion of the sheet flap carried out by the grip means, the detaching of the same sheet from the underlying sheets is initialized and then completed by means of a particular arrangement of the kinematic mechanism of detaching and lifting in such a way that an important displacement of detaching of the superior side of the front sheet from the underlying sheets is carried out against a minimum, infinitesimal practically, displacement of detaching of the inferior side of the front sheet from the underlying sheets, said displacements of removal being associated to a finite lifting displacement of the whole sheet as regards to the supporting base.

4. machine as per claim 1 **characterized by the fact that** the intermediate frame, in its longitudinal extension is driven by an only power mean preferably located in the centre line of the same frame in such a way to maintain a torsion elasticity of the frame useful to obtain that the suction cups holding plane can conjugate with the sheet laying on the storing system also when said sheet has a little warped layout due to its non perfect positioning or anyhow a non correct flatness which is typical especially of the sheets of laminated glass.

5. machine as per claim 1 **characterized by the fact that** further than the direct cycle of taking-off of the sheet of glass or similar material from the storing area for destination to the process machine the machine carries out also the inverse cycle of restitution of the sheet or portion of sheet to the storing area, simply using a different composition of the cycle phases, said inverse process could happen at every change of type of sheet or due to other exigencies.

6. machine as per one or more previous claims **characterized by the fact that** the sequence of the cycle phases is that illustrated with the figures.

7. machine as per claim 5 **characterized by the** fact that the sequence of the cycle phases can have an arrangement different from that represented in the figures, as well a reduction or an extension of the quantity of said phases, to optimize the transferring cycle from or to the storing area as function of the type of said sheets.

8. procedure for the taking-off of a sheet of glass or similar material or different material (as example sheets of metal) from a storing area or process area containing at least one sheet, but typically more sheets, and for its transfer to a process machine, or to another storing area, the sheet being of any dimension and any type, the origin and destination layout being vertical, horizontal or combined, **characterized by the fact that** the grip means carry out a first bending of an only flap of the sheet in such a way to initialize the progressive detaching from the underlying sheets.

9. procedure as per claim 8 **characterized by the fact that** instead in correspondence with a sheet flap said bending is carried out in correspondence with a sheet corner.

10. procedure as per claim 8 **characterized by the fact that** further than with the flexion of the sheet flap carried out by the grip means, the detaching of the same sheet from the underlying sheets is initialized and then completed by means of a particular arrangement of the kinematic mechanism of detaching and lifting in such a way that an important displacement of detaching of the superior side of the front sheet from the underlying sheets is carried out against a minimum, infinitesimal practically, displacement of detaching of the inferior side of the front sheet from the underlying sheets, said displacements of removal being associated to a finite lifting displacement of the whole sheet as regards to the supporting base.
